(19) Europäisches Patentamt
European Patent Office
Office européen des brevets

(11) **EP 1 235 952 B1**

(12) **EUROPEAN PATENT SPECIFICATION**

(45) Date of publication and mention
of the grant of the patent:
**29.10.2003 Bulletin 2003/44**

(51) Int Cl.[7]: **C25F 1/06**, C25F 5/00,
C22B 7/00

(21) Application number: **00974693.4**

(22) Date of filing: **13.11.2000**

(86) International application number:
**PCT/GB00/04333**

(87) International publication number:
**WO 01/040551 (07.06.2001 Gazette 2001/23)**

(54) **METHOD OF ELECTROCHEMICAL IN SITU DISPOSAL OF METAL STRUCTURES**

VERFAHREN ZUR ELEKTROCHEMISCHEN "IN SITU" BESEITIGUNG VON
METALLKONSTRUKTIONEN

PROCEDE D'ELIMINATION ELECTROCHIMIQUE IN SITU DE STRUCTURES METALLIQUES

(84) Designated Contracting States:
**AT BE CH CY DE DK ES FI FR GB GR IE IT LI LU
MC NL PT SE TR**

(30) Priority: **01.12.1999 GB 9928348**

(43) Date of publication of application:
**04.09.2002 Bulletin 2002/36**

(73) Proprietor: **Qinetiq Limited
London, SW1 6TD (GB)**

(72) Inventor: **LUDLOW, Jeremy, Leonard, Clive
DERA Farnborough Hampshire GU14 0LX (GB)**

(74) Representative: **Lowther, Deborah
D/IP QinetiQ Formalities,
A4 Bldg,
Ively Road
Farnborough, Hampshire GU14 0LX (GB)**

(56) References cited:
**EP-A- 0 149 938      DD-A- 138 952
DE-A- 2 435 580      FR-A- 2 588 597
US-A- 4 287 033      US-A- 5 810 995**

- **DATABASE WPI Section Ch, Week 198225
Derwent Publications Ltd., London, GB; Class
H01, AN 1982-52198E XP002160362 & SU 859 547
A (GIPROMORNEFTEGAS IN), 5 September 1981
(1981-09-05)**
- **PATENT ABSTRACTS OF JAPAN vol. 2000, no.
02, 29 February 2000 (2000-02-29) & JP 11 324348
A (NIPPON BOSHOKU KOGYO KK), 26
November 1999 (1999-11-26)**

**Description**

The invention relates to a method for disposal of metallic objects and structures and in particular to sub-surface marine structures, such as oil rigs.

In the past, operators of semipermanent marine structures, for example offshore oil and gas installations, have not been required to consider the environmental effects of their operations, including the disposal of the installation when it has reached the end of its useful life. In future, environmental considerations are likely to be enforced by law and therefore methods of safely dismantling and disposing of the installations are required by the oil and gas industry.

Current techniques for disposal or dismantling marine structures involves moving the structure to land and subsequently for conventional techniques to be employed i.e. flame cutting. The manpower and logistical problems with such a course of action are evident. Alternative proposed methods for remotely dismantling marine structures include explosive detonation and high power laser cutting, both of which methods have severe disadvantages.

It is known to preferentially remove metal as a surface finishing process (US 4,483,755) or by electrochemical machining (US 3,909,388; US 4,098,659; US 4,287,033; US 4,614,571). In surface finishing processes, the object is to remove any production marks from the surface. The amount of material removed is minimal as it is the removal of grooves or scratch marks that is desired. This results in a smooth surface when viewed by the naked eye. Electrochemical machining is a technique where the full thickness of a material is removed from a selected region. The area surrounding this selected region is masked so as to limit the electrochemical machining to this desired region. These techniques are limited to the removal of either a thin section from the surface or a small section of the article. Neither of these techniques would be applied to the bulk removal of a structure or the disposal thereof, as they would prove to be time consuming and costly.

It is therefore an object of the invention to provide a method of disposal of metal structures in a marine environment which allows inexpensive, safe disassembly in situ.

It is known to protect marine structures by galvanic coupling. Another less commonly used technique is known as the impressed current cathodic protection in which a structure is made electrochemically negative with reference to an inert cathode, which is supplying the electrons necessary to maintain the cathodic protection. The inventor has determined that by reversing the direction of current flow it is possible to accelerate the corrosion of a material by increasing its anodic polarisation, in a similar way to the effect on a zinc anode when it is attached to a steel structure.

The invention provides a method of disposal of metal structures in sea water comprising bulk dissolution of the metal structure by connecting said structure to the positive terminal of a DC power supply and immersing a cathode connected to the negative terminal of said power supply in said sea water.

In other words the metal structure is made the anode in an electrolytic circuit. This method provides a solution to the aforementioned problem of dismantling and requires minimal action from divers and obviates the need for retrieval of the structure to land based disassembly facilities.

Bulk dissolution of the metal structure is defined as being the removal of substantially the whole metallic structure. The structure is not masked to provide selective removal of the material. Differing rates of dissolution may occur especially when part of the structure has corroded or when the composition of the structure is not constant, but these differences in the rate of dissolution do not detract from the fact that the essential effect is for non-selective dissolution.

Preferably the connection to the metal structure is waterproof.

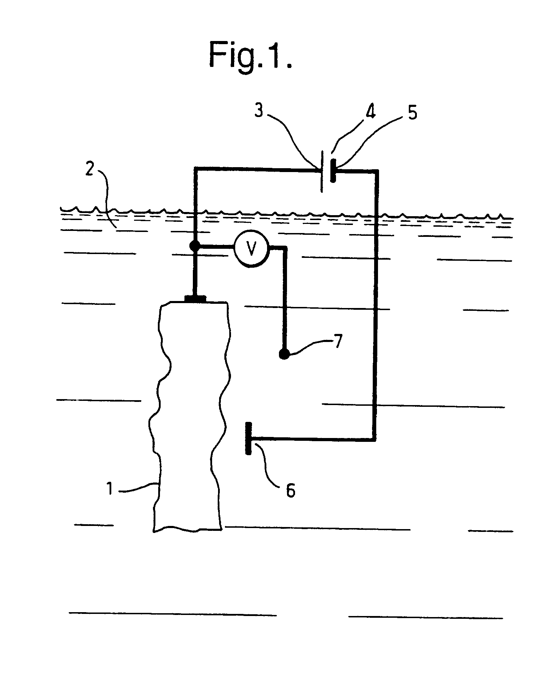

The invention will now be described by example with reference to figure 1.

Figure 1 illustrates an example of the method according to the invention. All iron/steel structure 1, immersed in sea water 2 and which is to be dissolved is attached to the positive terminal 3 of an electrical power supply 4, The negative terminal 5 of the power supply is connected to a cathode which is also immersed in the water. The cathode is located close to the metal structure. In operation at the anode the following reaction occurs:

$$Fe \longrightarrow Fe2+ + 2e-$$

At the cathode

$$O_2 + 2H2O + 4e- \longrightarrow 4OH-$$

$$H+ + 2e-$$

This follows the normal corrosion process, but running a current accelerates the process. in the example a reference electrode 7 is included for measurement purposes but it would be clear to the person skilled in the art that this is optional.

Preferably the cathode is located close to the metallic structure. The cathode may be of any appropriate shape or form and may include a plate or a sleeve shaped to conform to the general shape of the metallic object. The latter two options allow more efficient flow of current and therefore dissolution.

## Claims

1. A method of disposal of a metal structure in sea water comprising bulk dissolution of the metal structure by connecting said structure to the positive terminal of a DC power supply and immersing a cathode connected to the negative terminal of said power supply in said sea water.

2. A method as claimed in claim 1 wherein said metal structure is iron or steel.

3. A method as claimed in claims 1 or 2 wherein said structure is an oil or gas installation.

## Patentansprüche

1. Verfahren zur Beseitigung einer Metallkonstruktion in Meerwasser, umfassend Auflösen der Masse einer Metallkonstruktion durch Anschließen der Konstruktion an das positive Ende einer Gleichstrom-Stromquelle und Eintauchen einer Kathode, die an das negative Ende der Stromquelle angeschlossen ist, in das Meerwasser.

2. Verfahren nach Anspruch 1, wobei die Metallkonstruktion Eisen oder Stahl ist.

3. Verfahren nach Anspruch 1 oder Anspruch 2, wobei die Konstruktion eine Öl- oder Gasanlage ist.

## Revendications

1. Procédé pour l'élimination d'une structure métallique dans l'eau de mer comprenant la dissolution en masse de la structure métallique par raccordement de ladite structure à la borne positive d'une alimentation électrique en courant continu et l'immersion d'une cathode raccordée à la borne négative de ladite alimentation électrique dans ladite eau de mer.

2. Procédé selon la revendication 1, dans lequel ladite structure métallique est du fer ou de l'acier.

3. Procédé selon les revendications 1 ou 2, dans lequel ladite structure est une installation de pétrole ou de gaz.

# Fig.1.